# EUROPEAN PATENT APPLICATION

(11) **EP 3 470 132 A1**
(43) Date of publication of application: **17.04.2019**
(21) Application number: 18192103.2
(22) Date of filing: 31.08.2018
(51) Int. Cl.: B01D 53/50, C01C 1/247

(54) **A METHOD AND A DEVICE FOR OXIDIZING A SOLUTION FOR AMMONIA DESULFURIZATION**

(30) Priority: 13.04.2018 CN 201810329999; 13.06.2018 US 201816007875
(71) Applicant: Jiangnan Environmental Protection Group Inc., KY1-1002 Grand Cayman (KY)
(72) Inventor: LUO, Jing, NANJING, Jiangsu 211100 (CN); QI, Lifang, NANJING, Jiangsu 211100 (CN); LUO, Yongying, NANJING, Jiangsu 211100 (CN)
(74) Representative: Bottero, Carlo

(57) **Abstract**

The present invention relates to a method and a device for oxidizing an absorption solution for ammonia desulfurization in an oxidation column, wherein the absorption solution is sent to an oxidation column from an absorption column for ammonia desulfurization, and an oxidized solution is sent to the absorption column for ammonia desulfurization from the oxidation column, thus realizing a multistage circulation of the absorption solution; and during the oxidation in the oxidation column, a pressurized air is used as the oxidation air, and a multistage air distribution is used, for a compulsory oxidation of the absorption solution, so as to decrease the investment and operation costs and control the production of aerosol during ammonia desulfurization.

## Description

### Technical Field

The present invention belongs to the technical field of environmental protection, and specifically relates to a method and a device for oxidizing a solution for ammonia desulfurization. The present invention further relates to a method for operating the device.

### Background Art

Sulfur dioxide is discharged in different degrees in various countries in the world. In China, the emission of sulfur dioxide is large, thus impacting on the environment and the society. The discharged sulfur dioxide further strongly influences the ecological environment and people's health, in addition to causing economic loss.

At present, there are hundreds of relatively mature desulfurization techniques, wherein wet desulfurization processes are most widely applied, and represent around 85% of total installed capacity of desulfurization in the world. Common wet flue gas desulfurization techniques comprise limestone-gypsum method, dual-alkali method, sodium carbonate method, ammonia method, magnesium oxide method, etc. Ammonia desulfurization is a wet desulfurization process using ammonia as an absorbent, in which SO₂ can be utilized for producing ammonium sulfate chemical fertilizer, and this is an environmental-friendly flue gas treatment scheme with low energy consumption, high added-value and resources recycling being realizable. Chemical industry produces a large amount of available aqua ammonia during production, and therefore, an unique superiority exists in using ammonia desulfurization for the boiler exhaust gas in chemical industry.

Ammonia desulfurization process mainly comprises three processes of absorption, oxidation and concentration (crystallization), wherein sulfur dioxide is first absorbed by ammonium sulfite to obtain a mixed solution of ammonium sulfite and ammonium hydrogen sulfite, and the ammonium hydrogen sulfite therein is then subjected to neutralization by adding ammonia to obtain ammonium sulfite again. The absorption of sulfur dioxide and neutralization by adding ammonia can be simply expressed by the following chemical formulas:

(NH₄)₂SO₃ + H₂O + SO₂ = 2NH₄HSO₃

(NH₄)ₓH(2-x)SO₃ + (2-x)NH₃ = (NH₄)₂SO₃

During the oxidation, oxidation air is introduced into the solution so that ammonium (hydrogen) sulfite is oxidized to obtain ammonium (hydrogen) sulfate:

(NH₄)₂SO₃ + 1/2O₂ = (NH₄)₂SO₄

The ammonium sulfate solution is subjected to concentration, crystallization, solid-liquid separation and drying to obtain the final product ammonium sulfate.

In ammonia desulfurization, ammonia is used as an absorbent to absorb sulfur dioxide in a waste gas, and thus a solution of ammonium hydrogen sulfite and ammonium sulfite is produced. The solution can be easily decomposed and is not stable, and therefore needs to be oxidized into a solution of ammonium hydrogen sulfate and ammonium sulfate. One of the major steps of ammonia desulfurization is to oxidize the ammonium (hydrogen) sulfite in the desulfurization absorption solution into the ammonium (hydrogen) sulfate. If the oxidation is not sufficient, the recovery of SO₂ in flue gas is affected, and an aerosol is easily produced.

The oxidation of ammonium sulfite is one of the main steps of ammonia desulfurization, and is significantly different from the oxidation of other sulphite salts, since NH₄⁺ at a certain concentration has a damping effect on the oxidation process. The reference Chemical Engineering Science, 2000, Volume 55, Issue 23, December 2000, Pages 5637-5641, Pergamon Press, Oxford, England, 2000 discloses the unique nature, i.e., NH₄⁺ significantly inhibits the dissolution of O₂ in an aqueous solution. When the salt concentration is less than 0.5 mol/L (i.e., around 5 (weight)%), the oxidation rate of ammonium sulfite increases with its concentration, whereas when beyond this limit value, the oxidation rate decreases as the concentration increases.

The oxidation process of ammonium sulfite is namely the process of combining ammonium sulfite and oxygen to produce ammonium sulfate. Ammonium sulfite at a low concentration is relatively easily oxidized, and has relatively high oxidation rate; however, in a solution with a higher concentration of ammonium sulfite or ammonium sulfate, the oxidation rate of ammonium sulfite is lower. The oxidation rate is influenced by various factors such as slurry temperature, O/S ratio, gas-liquid contact area, pH value, salt concentration and oxygen dissolution rate and the like.

A higher dissolution rate of oxygen in a solution is more advantageous for the oxidation of ammonium sulfite. The solubility of oxygen in water is very small. At the standard state, every 100 cm³ of water can dissolve 3.08 cm³ of oxygen, and at 50°C can dissolve 2.08 cm³ of oxygen. In a solution containing high concentration of ammonium sulfate, the viscosity of the solution is much larger than water, and the solubility and dissolution rate of oxygen is lower. How to improve the utilization rate of oxygen in a solution containing ammonium sulfate and decrease the amount of oxidation air and the pressure is a problem in ammonium sulfite oxidation.

In fact, the oxidation reaction of ammonium sulfite also occurs during absorption process, but the oxidation ratio is generally 40%-70% under continuous circulation because of low O₂ content, low temperature and slow reaction speed in flue gas. This oxidation ratio is not enough, and needs to be further improved to 90% or more to meet the processing requirement of post-treatment. This is rather difficult. In the prior art, an oxidation tank/oxidation section/jet oxidizer is commonly used. Some technicists choose to add a catalyst into the absorption solution to facilitate oxidation, but this may affect the quality of the product.

Chinese patent application for invention CN103212348A proposes a process and a device for oxidizing ammonium sulfite. The device comprises an oxidation tank with a slurry discharge pump at the bottom thereof, and further comprises: a pipeline for adding ammonia communicating with the top of the oxidation tank; an oxidation air duct arranged inside the oxidation tank and located at the lower portion thereof; and perforated plates deposited at interval in several layers arranged inside the oxidation tank and located in the middle portion thereof. Here, an ammonium sulfite slurry is sent into a slurry tank, the pH value of the ammonium sulfite slurry is adjusted to 6-8 by adding aqua ammonia, then the slurry is sent to the oxidation tank from the top of the oxidation tank, and the ammonium sulfite slurry slowly flows from the top of the oxidation tank to the bottom of the oxidation tank; the oxidation air is jetted into small bubbles via the oxidation air duct and enters an ammonium sulfate slurry, and then is brought into contact with the ammonium sulfate slurry for oxidation reaction after crushed by the perforated plates; and after the oxidation reaction finished, the slurry is discharged by the slurry discharge pump. Here, the perforated plates have 2-5 layers with the interval of 1-4 m between adjacent layers, and have a hole diameter of 2-20 mm, with the hole centre distance being 2-5 times of the hole diameter; the residence time of the ammonium sulfate slurry in the oxidation tank is 10-60 min; the air volume of the oxidation air is satisfying such that the O/S ratio during the oxidation is 2-5. The process and the device have the disadvantages that the amount of the oxidation air is large, the oxidation time is long, the oxidation ratio cannot be guaranteed, and oxidation pH is high so that ammonia escapes and an aerosol is produced, etc..

Chinese patent application for invention CN1408464A proposes a method and a device for removing and recovering SO₂ in flue gas, wherein the concentration of ammonium sulfite is controlled between 0.1-5 (weight)%, preferably between 0.5-2.0 (weight)% so as to create the conditions most beneficial to oxidation and decrease the energy consumption for oxidation and investment. Here, an oxidation reaction is performed between the resultant ammonium sulfite solution and the air to obtain an ammonium sulfate solution. The pressure of the compressed air is generally 0.05-0.2 Mpa (gauge pressure); the flow of the compressed air is 1-5 times, commonly 2-4 times, of the theoretical amount required for oxidizing the ammonium sulfite; the residence time of the oxidation reaction is generally between 1-3 hours, and preferably around 2 hours. Under this condition, the oxidation ratio can be more than 95%. The concentration of the ammonium sulfate solution is generally 5-20 (weight)%. The process has the disadvantages that the amount of the oxidation air is large, the oxidation time is long, the oxidation ratio cannot be guaranteed, the air quality in post-treatment plant is poor, the concentration of the oxidized solution is low, the investment is large and the operating cost is high.

Chinese utility model CN206810043U proposes an ammonia desulfurization multistage oxidation tank, wherein a reflux liquid inlet is arranged in the upper of the tank, an oxidized solution outlet externally connecting to a circulating pump is arranged at the bottom of the tank, and several layers of oxidation devices, comprising air distributors, oxidized solution distributors and aeration devices, are arranged inside the tank; the aeration devices comprises several aerators arranged on a slot plate and communicating both sides of the slot plate. The aerators divide bubbles, refresh gas-liquid contact face, increase liquid mass transfer efficiency and enhance oxidation effects; Oxidation ejector has the function of self-priming air, and decreases the air consumption of a first stage oxidation system; in addition, ammonium sulfate reflux liquid is jetted below the liquid level, thus enhancing the slurry turbulence and improving the oxidation efficiency. Staged oxidation function is realized by three-stage oxidation system. Nevertheless, this process does not disclose the oxidation conditions, the structure is complex and the investment is large.

Therefore, it is necessary to choose a more suitable oxidation process and device to decrease the investment and operating costs of the oxidation system, reach the optimal oxidation effects, increase ammonia recovery ratio, and control the production of aerosol.

In the known prior art, the key of ammonia desulfurization oxidation technique is not completely mastered, it is difficult or even unable to realize low investment and low operating costs of oxidation device, and it is difficult or even unable to reach the optimal oxidation effects and guarantee ammonia recovery ratio and control the production of aerosol.

### Summary of the Invention

The objective of the present invention is to provide a method and a device for oxidizing a solution for ammonia desulfurization, and a method for operating the device.

For this purpose, the present invention provides a method for oxidizing a solution for ammonia desulfurization, characterized in that during an oxidation process, a pressurized air with low costs and a multistage air distribution are used for the compulsory oxidation of the absorption solution and for realizing a multistage circulation and for reaching the objective of high-efficiency and low-cost oxidation.

The present invention further provides a method for oxidizing an absorption solution for ammonia desulfurization, characterized in that:
the absorption solution is sent to an oxidation column from an absorption column for ammonia desulfurization, and the oxidized absorption solution or the oxidized solution is sent to the absorption column for ammonia desulfurization from the oxidation column, thus realizing a multistage circulation of the absorption solution; and
during the oxidation in the oxidation column, a pressurized air is used as an oxidation air, and a multistage air distribution is used, for a compulsory oxidation of the absorption solution and for realizing a multistage circulation of the oxidation air, and preferably the oxidation air that will complete the oxidation of the absorption solution is sent to the absorption column for ammonia desulfurization for a secondary oxidation of the absorption solution in the absorption column for ammonia desulfurization.

In a further embodiment of the method of the present invention, the pressure of the pressurized air is 0.05-0.3 MPa, and preferably 0.07-0.23 MPa. The pressure is gauge pressure, or relative pressure in relation to ambient pressure, unless otherwise indicated.

In a further embodiment of the method of the present invention, the stage number of the air distribution is 1-6, and preferably 2-5, such as 3, 4 and 5.

In a further embodiment of the method of the present invention, sieve plate(s) is/are used in one or more air distribution stages, the sieve plate(s) has/have holes with a single hole area of 4-400 mm² and preferably 9-225 mm², such as 50 mm², 100 mm², 150 mm² and 200 mm². The open porosity of the sieve plates is preferably 1%-15%, and more preferably 1.5%-10%, such as 2%, 3%, 5%, 8% or 9%. Particularly preferably the open porosity of the sieve plates of a plurality of air distribution stages increase by degrees from the bottom to the top.

In a further embodiment of the method of the present invention, the addition amount of the oxidation air introduced is controlled so that the addition amount of the oxidation air is 1.2-20 times of the theoretical amount of the oxidant required for oxidizing the ammonium (hydrogen) sulfite in the absorption solution, and preferably 2-8 times, such as 3, 4, 5 or 6 times.

In a further embodiment of the method of the present invention, the ingredients of the absorption solution are controlled by the multistage circulation so that the content of the ammonium (hydrogen) sulfite in the absorption solution to be oxidized is 0.1-8 (weight)%, and preferably 0.2-5 (weight)%, and the content of ammonium sulfate is 2-38 (weight)%.

In a further embodiment of the method of the present invention, the liquid volume in the oxidation column is controlled so that the oxidation time of the absorption solution in the oxidation column is 5-90 min, and preferably 10-70 min, such as 20 min, 30 min, 40 min, 50 min, 60 min and 80 min.

In a further embodiment of the method of the present invention, the oxidation ratio of the ammonium sulfite and ammonium hydrogen sulfite in the oxidized absorption solution is controlled within 90%-99.9% or higher.

In a further embodiment of the method of the present invention, the oxidation of the absorption solution in the oxidation column is enhanced by an oxidation enhancing equipment.

The present invention further proposes a device for oxidizing a solution for ammonia desulfurization, characterized by comprising an oxidation air system, an oxidation system comprising an oxidation column (tank), and the oxidation column comprising a column body, wherein an oxidation chamber is formed in the column body, and an absorption solution inlet, an oxidized solution outlet, an oxidation air inlet and an oxidation air outlet are arranged on the column body.

The present invention further proposes a device for oxidizing an absorption solution for ammonia desulfurization, comprising an oxidation air system and an oxidation column, which comprises a column body, wherein an oxidation chamber is formed in the column body, an absorption solution inlet for introducing the absorption solution to be oxidized, an oxidized solution outlet for discharging the oxidized absorption solution, an oxidation air inlet and an oxidation air outlet are arranged in the column body, the oxidation air system being connected to the oxidation air inlet, and the oxidation air outlet being connected to the absorption column for ammonia desulfurization, characterized in that:
the device is configured such that the absorption solution is sent to the oxidation column from an absorption column for ammonia desulfurization, and the oxidized absorption solution or the oxidized solution is sent to the absorption column for ammonia desulfurization from the oxidation column, thus realizing a multistage circulation of the absorption solution; and
the oxidation air system is configured such that during an oxidation in the oxidation column, a pressurized air is used as the oxidation air, and a multistage air distribution is used, for the compulsory oxidation of the absorption solution and for realizing a multistage circulation of the oxidation air, and preferably the oxidation air that will complete the oxidation of the absorption solution is sent to the absorption column for ammonia desulfurization for the secondary oxidation of the absorption solution in the absorption column for ammonia desulfurization.

In a further embodiment of the device of the present invention, 1, 2, 3 or more layers of gas-liquid dispersion enhancers are arranged in the oxidation column. The form of the gas-liquid dispersion enhancers is preferably any one or a combination of any number of structured packings, random packings, perforated plates, gas caps and aerators.

In a further embodiment of the device of the present invention, the device further comprises an oxidation enhancing equipment, and the oxidation enhancing equipment is preferably any one or a combination of any number of an acoustic wave generating equipment, an ultrasonic wave generating equipment, an infrared ray generating equipment, an ultraviolet light generating equipment and an electron beam generating equipment.

In a further embodiment of the device of the present invention, an air distributor is arranged at a washing and cooling section in the absorption column for ammonia desulfurization, and the air distributor comprises a main pipe and a branch pipe, wherein the branch pipe has holes, with a single hole area of 25-625 mm², and preferably 64-400 mm², such as 50 mm², 100 mm², 150 mm², 200 mm², 250 mm², 300 mm², 350 mm², 400 mm², 450 mm², 500 mm².

The present invention further provides a method for operating the device of the present invention, characterized in that the method comprises the following process steps:
1) an absorption solution to be oxidized from an absorption column for ammonia desulfurization is sent to an oxidation column;
2) a pressurized oxidation air provided by an oxidation air system is introduced into the oxidation column, wherein the oxidation air is brought into contact with the absorption solution, and the ammonium sulfite and ammonium hydrogen sulfite in the absorption solution are oxidized into ammonium sulfate and ammonium hydrogen sulfate;
3) after adding ammonia to the oxidized absorption solution, a part thereof is sent to a washing and cooling section in the absorption column for ammonia desulfurization for spray, and the washing and cooling section is rinsed, and the other part thereof is sent to an absorption section of the absorption column for ammonia desulfurization;
4) the reacted oxidation air is sent to the washing and cooling section and/or absorption section of the absorption column for ammonia desulfurization, wherein where sending to the washing and cooling section of the absorption column for ammonia desulfurization, the solution for washing and cooling is subjected to a secondary oxidation while the solution for washing and cooling being stirred.

According to another aspect, an apparatus for oxidizing an ammonia desulfurization solution is provided, the apparatus comprising:
an oxidation air system; and
an oxidation tank having:
   an absorption liquid inlet;
   an absorption liquid outlet;
   an oxidation air inlet; and
   an oxidation air outlet.

In a preferable further embodiment, the apparatus further comprises, in the tank, a gas-liquid dispersion enhancer.

In a preferable further embodiment, the enhancer includes a sieve plate layer that includes a sieve plate.

In a preferable further embodiment, the sieve plate layer is one of a plurality of sieve plate layers.

In a preferable further embodiment, the plurality includes two or three sieve plate layers. In a preferable further embodiment, the enhancer includes structured packings.

In a preferable further embodiment, the enhancer includes random packings.

In a preferable further embodiment, the enhancer includes apertured plates.

In a preferable further embodiment, the enhancer includes gas caps.

In a preferable further embodiment, the enhancer includes aeration heads.

In a preferable further embodiment, the enhancer includes a feature selected from the group consisting of:
structured packings;
random packings;
apertured plates;
gas caps;
aeration heads; and
a combination of one or more of the foregoing features.

In a preferable further embodiment, the enhancer includes structured packings, random packings, apertured plates, gas caps, and aeration heads.

In a preferable further embodiment, the apparatus further comprises an oxidation enhancing device mated to the tank.

In a preferable further embodiment, the oxidation enhancing device includes an acoustic wave generating device.

In a preferable further embodiment, the oxidation enhancing device includes an ultrasonic wave generating device.

In a preferable further embodiment, the ultrasonic generating device is configured to emit an ultrasonic frequency in the range 50 to 100 kHz.

In a preferable further embodiment, the frequency is in the range 60 to 85 kHz; and the ultrasonic generating device is configured to provide a sound intensity in the range 12 to 40 Watts/Liter, in particular in the range 18 to 24 Watts/Liter.

In a preferable further embodiment, the oxidation enhancing device includes an infrared ray generating device.

In a preferable further embodiment, the oxidation enhancing device includes an ultraviolet light generating device.

In a preferable further embodiment, the oxidation enhancing device includes an electron beam generating device.

In a preferable further embodiment, the oxidation enhancing device includes a feature selected from the group consisting of:
an acoustic wave generating device;
an ultrasonic wave generating device;
an infrared ray generating device;
an ultraviolet light generating device;
an electron beam generating device; and
a combination of one or more of the foregoing features.

In a preferable further embodiment, the apparatus further comprises:
a flue gas desulfurization tower washing and cooling section; and
an air distributor disposed in the washing and cooling section, the air distributor including a main pipe and a branch pipe that defines openings.

In a preferable further embodiment, an opening of the openings has an area in the range 25 to 625 mm², in particular 64 to 400 mm².

According to another aspect, an apparatus for oxidizing an ammonia desulfurization absorption liquid is provided, the apparatus comprising:
an oxidation air system; and
an oxidation column that includes:
   an oxidation column body;
   an oxidation chamber in the oxidation column body, the chamber configured to provide a multi-stage air distribution that forces oxidization of the absorbing liquid;
   an input on the tower body for inputting absorption liquid from an ammonia desulfurization absorption tower;
   an outlet on the oxidation column body for providing oxidation-treated absorption liquid to the ammonia desulfurization absorption tower;
   an oxidation air inlet on the oxidation column body, and
   an oxidation air outlet on the oxidation column body;
wherein:
the oxidation air system is configured to feed pressurized air into the oxidation air inlet; and
the oxidation air outlet is configured to feed oxidation air into an ammonia desulfurization absorption tower.According to another aspect, a method for operating the apparatus is provided, the method comprising:
   feeding absorption solution from an ammonia desulfurization absorption tower to the oxidation tank;
   supplying oxidation air from the oxidation air system to the oxidation tank;
   bringing the oxidation air into contact with the absorption liquid to oxidize ammonium sulfite and ammonium bisulfite in the absorption liquid to ammonium sulfate and ammonium bisulfate;
   sending a first fraction of absorption solution from the absorption liquid output to a washing and cooling section of the ammonia desulphurization absorption tower;
   in the washing and cooling section, using the first fraction, washing the flue gas;
   sending a second fraction of absorption solution from the absorption liquid output to an absorption section of the desulfurization absorption tower;
   sending air from the oxidation air outlet to the washing and cooling section to provide secondary oxidation of washing and cooling liquid; and
   stirring the washing and cooling liquid.

According to another aspect, a method for operating the apparatus is provided, the method comprising:
feeding absorption solution from an ammonia desulfurization absorption tower to the oxidation tank;
supplying oxidation air from the oxidation air system to the oxidation tank;
bringing the oxidation air into contact with the absorption liquid to oxidize ammonium sulfite and ammonium bisulfite in the absorption liquid to ammonium sulfate and ammonium bisulfate;
sending a first fraction of absorption solution from the absorption liquid output to a washing and cooling section of the ammonia desulfurization absorption tower;
in the washing and cooling section, using the first fraction, washing the flue gas;
sending a second fraction of absorption solution from the absorption liquid output to an absorption section of the desulfurization absorption tower;
sending air from the oxidation air outlet to the absorption section of the ammonia desulfurization absorption tower to provide secondary oxidation of the absorption solution.

In a preferable further embodiment, the method further comprises sending air from the oxidation air outlet to the absorption section of the ammonia desulfurization absorption tower to provide secondary oxidation of the absorption solution.

In a preferable further embodiment, the method further comprises sending air from the oxidation air outlet to the washing and cooling section to provide secondary oxidation of washing and cooling liquid.

In a preferable further embodiment, the method further comprises adding ammonia to the absorption solution after the absorption solution exits the absorption liquid output and before the absorption solution enters the desulfurization absorption tower.

According to another aspect, a method for operating the apparatus is provided, the method comprising:
feeding absorption solution from an ammonia desulfurization absorption tower to the oxidation tank;
supplying oxidation air from the oxidation air system to the oxidation tank;
bringing the oxidation air into contact with the absorption liquid to oxidize ammonium sulfite and ammonium bisulfite in the absorption liquid to ammonium sulfate and ammonium bisulfate;
sending a first fraction of absorption solution from the absorption liquid output to the washing and cooling section of the ammonia desulphurization absorption tower;
in the washing and cooling section, using the first fraction, washing the flue gas;
sending a second fraction of absorption solution from the absorption liquid output to an absorption section of the desulfurization absorption tower;
sending air from the oxidation air outlet to the washing and cooling section to provide secondary oxidation of washing and cooling liquid; and
stirring the washing and cooling liquid.

According to another aspect, a method for operating the apparatus is provided, the method comprising:
feeding absorption solution from an ammonia desulfurization absorption tower to the oxidation tank;
supplying oxidation air from the oxidation air system to the oxidation tank;
bringing the oxidation air into contact with the absorption liquid to oxidize ammonium sulfite and ammonium bisulfite in the absorption liquid to ammonium sulfate and ammonium bisulfate;
sending a first fraction of absorption solution from the absorption liquid output to the washing and cooling section of the ammonia desulphurization absorption tower;
in the washing and cooling section, using the first fraction, washing the flue gas;
sending a second fraction of absorption solution from the absorption liquid output to an absorption section of the desulfurization absorption tower;
sending air from the oxidation air outlet to the absorption section of the ammonia desulfurization absorption tower to provide secondary oxidation of the absorption solution.

In a preferable further embodiment, the method further comprises sending air from the oxidation air outlet to the absorption section of the ammonia desulfurization absorption tower to provide secondary oxidation of the absorption solution.

In a preferable further embodiment, the method further comprises sending air from the oxidation air outlet to the washing and cooling section to provide secondary oxidation of washing and cooling liquid.

In a preferable further embodiment, the method further comprises adding ammonia to the absorption solution after the absorption solution exits the absorption liquid output and before the absorption solution enters the desulfurization absorption tower.

According to another aspect, a method for oxidizing an ammonia-bearing desulfurization solution is provided, the method comprising:
expanding air, at an air distribution stage in a tank, against the solution; and, then,
providing the solution to a plurality of different sections of a flue gas desulfurization tower.

In a preferable further embodiment, the providing includes spraying the solution in a washing and cooling section of the tower.

In a preferable further embodiment, the providing includes spraying the solution in an absorption section of the tower.

In a preferable further embodiment, the providing includes spraying the solution in:
a washing and cooling section of the tower; and
an absorption section of the tower.

In a preferable further embodiment, the method further comprises receiving the solution from the output of an absorption section of the tower.

In a preferable further embodiment, the method further comprises, before the providing, adding ammonia to the solution.

In a preferable further embodiment, the method further comprises providing air at 0.5-0.3 MPa-g for the expanding, in particular at 0.7-0.23 MPa-g.

In a preferable further embodiment, the expanding includes distributing the air in more than one air distribution stage.

In a preferable further embodiment, the expanding includes distributing the air in no more than 6 air distribution stages.

In a preferable further embodiment, the expanding includes distributing the air in no less than 1 stage and no more than 5 stages.

In a preferable further embodiment, the expanding includes, at the air distribution stage, passing the air through a sieve plate; and the sieve plate defines a hole having an area that is 4 to 400 mm², in particular 9 to 225 mm².

In a preferable further embodiment, the sieve plate has a porosity of 1 to 15%, in particular 1.5 to 10%.

In a preferable further embodiment:
the air distribution stage is included in a plurality of air distribution stages;
the air distribution stages are arrayed vertically;
each of the air distribution stages includes a sieve plate having a corresponding porosity; and
the porosity of the stages increase from a bottom stage to a top stage.

In a preferable further embodiment, the method further comprises flowing the air into the tank at a rate no less than that stoichiometrically required to oxidize ammonium sulfite and ammonium bisulfite in the solution.

In a preferable further embodiment, the rate is 1.2 to 20 times, in particular 2 to 8 times, that stoichiometrically required.

In a preferable further embodiment, the method further comprises:
circulating the solution through the tower;
feeding the solution to the tank after the solution circulates through the tower; and
controlling the circulation so that, upon the feeding, the solution has:
   0.1 to 8 wt%, in particular 0.2 to 5 wt%, ammonium sulfite and ammonium bisulfite; and
   2 to 38 wt% ammonium sulfate.

In a preferable further embodiment, the method further comprises selecting a volume for the tank so that the solution has an oxidation time in the oxidation tank of 5 to 90 min, in particular10 to 70 min.

In a preferable further embodiment, the method further comprises:
feeding the solution to the tank in a condition in which the solution has a first sulfite content, including only ammonium sulfite and ammonium bisulfite; and
drawing the solution from the tank in a condition in which the solution has a second sulfite content, including only ammonium sulfite and ammonium bisulfite;
wherein the second sulfite content is no more than 10% of the first sulfite content.

In a preferable further embodiment, the second sulfite content is no more than 0.1% of the first sulfite content.

In a preferable further embodiment, the method further comprises enhancing oxidation of the solution using an oxidation enhancing device.

According to another aspect, a method for oxidizing an ammonia desulfurization absorption liquid is provided, the method comprising:
reacting the absorption liquid with flue gas in a desulfurization absorption tower;
after the reacting, transferring the absorption liquid to an oxidation column;
after the transferring, oxidizing the absorption liquid in the oxidation column; and,
after the oxidizing, returning the absorption liquid to the desulfurization absorption tower.

In a preferable further embodiment, the oxidizing includes distributing pressurized air in multiple stages in the absorption liquid.

It should be noted herein that all the technical features disclosed in the present application can be combined in any form, only if the combination is technically feasible. All the combinations are technical contents disclosed in the present application.

### Brief Description of the Drawings

The present invention is illustrated by way of the Examples in the following in more detail with reference to the drawing, but the present invention is not limited to the illustrated and described Examples. The schematic drawing is briefly described as follows:

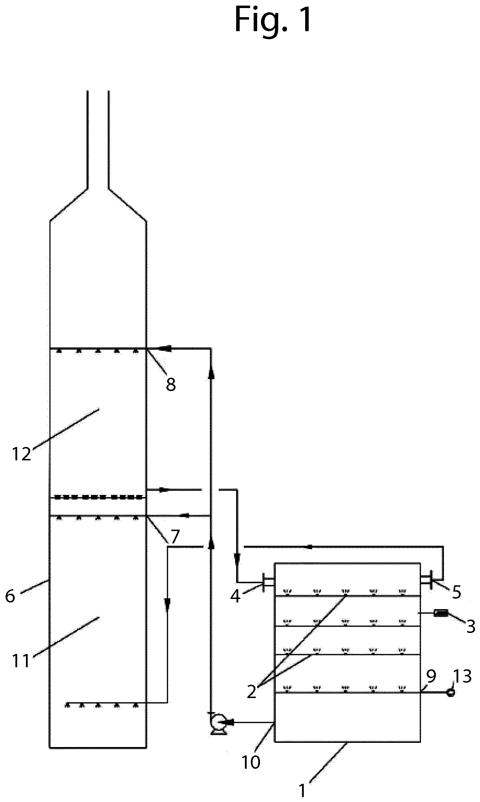

Fig. 1 is a schematic diagram of a device for oxidizing the absorption solution for ammonia desulfurization according to an Example of the present invention.

### Detailed Description of the Drawings

In the device for oxidizing the absorption solution for ammonia desulfurization as shown in Fig. 1, a pressurized air with low costs can be used as the oxidation air during the oxidation process, and a multistage air distribution is used for the compulsory oxidation of the absorption solution, for realizing a multistage circulation of the absorption solution and the oxidation air and for reaching the objective of high-efficiency and low-cost oxidation.

The device as shown in Fig. 1 comprises an oxidation air system 13 and an oxidation column 1, and the oxidation column 1 comprises a column body, wherein an oxidation chamber is formed in the column body, and an absorption solution inlet 4, an oxidized solution outlet 10, an oxidation air inlet 9 and an oxidation air outlet 5 for the oxidation chamber are arranged in the column body.
4 layers of gas-liquid dispersion enhancers 2 are arranged inside the oxidation column 1. The form of the gas-liquid dispersion enhancers 2 is 2 layers of perforated plates + 2 layers of aerators.

The device as shown in Fig. 1 further comprises an oxidation enhancing equipment 3, and the oxidation enhancing equipment is an ultrasonic wave generating equipment. The ultrasonic frequency is 60-85 kHz and the sound intensity is 20 W/L.

The pressure of the pressurized air can be 0.06-0.18 MPa (gauge pressure).

In the oxidation column, the stage number of the air distribution is 4.

Sieve plates are used for air distribution stages, the sieve plates have holes with a single hole area of 121-196 mm². The open porosity of the four layers of sieve plates from the bottom to the top is 2.1%, 2.3%, 2.3%, and 2.5% respectively.

The addition amount of the oxidation air is adjusted to 4 times of the theoretical amount of the oxidant required for oxidizing the ammonium (hydrogen) sulfite in the absorption solution.

The content of the ammonium (hydrogen) sulfite in the absorption solution is adjusted to 0.5-2.5 (weight)%, and the content of ammonium (hydrogen) sulfate is adjusted to 19-25 (weight)%.

The residence time of the absorption solution in the oxidation column is 30-42 min.

In an advantageous embodiment, the oxidized absorption solution or the oxidized solution is supplied with ammonia or an ammonia-containing absorption solution by a static mixer before entering the absorption column for ammonia desulfurization. Unlike this, in CN103212348A ammonia is added into the slurry before the slurry enters an oxidation column, and this brings about a series of technical deficiencies related thereto: low pH is beneficial to the oxidation of ammonium sulfite; at high pH oxidation costs are high, the oxidation ratio cannot be guaranteed, and high pH slurry easily produces ammonia escape and aerosol during oxidation because of the gas stripping of air.

Fig. 1 further shows an absorption column 6 of ammonia desulfurization, comprising a washing and cooling section 11 and an absorption section 12. The washing and cooling section 11 is provided with a washing and spray device 7. The absorption section 12 is provided with an absorption and spray device 8.

The device can run with the following specific process steps when being operated:
1) The absorption solution is introduced into the oxidation column 1.
2) The oxidation air provided by the oxidation air system 13 is introduced into the oxidation column 1, brought into contact with the absorption solution, and the ammonium (hydrogen) sulfite in the absorption solution is oxidized into ammonium (hydrogen) sulfate.
3) A part of the oxidized absorption solution (or oxidized solution) is introduced into the washing and spray device 7 in the washing and cooling section 11 in the absorption column 6 for ammonia desulfurization, and brought into contact with flue gas in counter-current flow so that the oxidized solution is concentrated while the flue gas being cooled and the washing and cooling section is rinsed; and the other part of the oxidized absorption solution is introduced into the absorption and spray device 8 in the absorption section 12 of the absorption column 6 for ammonia desulfurization.
4) The reacted oxidation air is sent to the washing and cooling section 11 of the absorption column 6 for ammonia desulfurization via the oxidation air outlet 5, and the solution for washing and cooling can be subjected to secondary oxidation while the solution for washing and cooling being stirred.

The oxidation ratio of the ammonium (hydrogen) sulfite in the absorption solution can be controlled within 96.5%-99.5% or more according to the process requirements.

An air distributor can also be arranged at the washing and cooling section in the absorption column for ammonia desulfurization, and the air distributor comprises a main pipe and a branch pipe, wherein the branch pipe has holes, with the hole diameter of 10-20 mm.

There are multiple layers of gas-liquid dispersion enhancers (for example, in the form of sieve plates), which have uniform distribution effect on the oxidation air and the absorption solution (the oxidized solution), in the oxidation column to realize the multistage oxidation (multistage circulation). In addition, a circulation of the absorption solution (the oxidized solution) also exists between the absorption column for ammonia desulfurization and the oxidation column. Multiple distribution of the oxidation air is achieved by the gas-liquid dispersion enhancers in the oxidation column so that multiple uniform distribution of the oxidation air is achieved and the oxidation air is brought into contact with the absorption solution in counter-current flow for many times, which is beneficial to oxidation.

Another Example of the present invention is explained below.

During the oxidation process, a pressurized air with low costs and a multistage air distribution are used for the compulsory oxidation of the absorption solution, for realizing a multistage circulation and for reaching the objective of high-efficiency and low-cost oxidation.

The pressure of the pressurized air is 0.105 MPa.

The stage number of the air distribution is 3.

Sieve plates are used for air distribution stages, the sieve plates have holes with a single hole area of 16-64 mm². The open porosity of the three layers of sieve plates from the bottom to the top is 5.2%, 5.3% and 5.5% respectively.

The addition amount of the oxidation air is 5.2 times of the theoretical amount of the oxidant required for oxidizing the ammonium (hydrogen) sulfite in the absorption solution.

The content of the ammonium (hydrogen) sulfite in the absorption solution is 0.3-1 (weight)%, and the content of ammonium sulfate is 20-23 (weight)%.

The oxidation time is 52 min.

The device comprises an oxidation air system 13 and an oxidation column 1, and the oxidation column 1 comprises a column body, wherein an oxidation chamber is formed in the column body, and an absorption solution inlet 4, an oxidized solution outlet 10, an oxidation air inlet 9 and an oxidation air outlet 5 are arranged in the column body.
3 layers of gas-liquid dispersion enhancers 2 are arranged inside the oxidation chamber. The form of the gas-liquid dispersion enhancers 2 is 2 layers of perforated plates + 1 layer of structured packing.

The device further comprises an oxidation enhancing equipment, and the oxidation enhancing equipment is an ultraviolet light generating equipment.

The absorption solution inlet 4 and the oxidized solution outlet 10 are provided with a plug valve respectively, and the material of the throughflow part of the valve is 316-steel coated with fluoroplastic.

The specific steps can comprise that:
1) The absorption solution is introduced into the oxidation column 1.
2) The oxidation air provided by the oxidation air system 13 is introduced into the oxidation air inlet 9 of the oxidation column, brought into contact with the absorption solution, and the ammonium (hydrogen) sulfite in the absorption solution is oxidized into ammonium (hydrogen) sulfate.
3) A part of the oxidized absorption solution (or oxidized solution) is introduced into the washing and spray device 7 in the washing and cooling section 11 in the absorption column 6 for ammonia desulfurization, and brought into contact with flue gas in counter-current flow so that the oxidized solution is concentrated while the flue gas being cooled, and the wall of the column and the support beam are rinsed; and the other part of the oxidized absorption solution is supplied with ammonia and introduced into the absorption and spray device 8 in the absorption section 12 of the absorption column 6 for ammonia desulfurization.
4) The reacted oxidation air is sent to the absorption section 12 of the absorption column 6 for ammonia desulfurization via the oxidation air outlet 5.

The oxidation ratio of the ammonium (hydrogen) sulfite in the absorption solution is 97.5%-99%.

The washing and cooling section 11 in the absorption column 6 for ammonia desulfurization is provided with a stirrer.

The amount of the treated boiler flue gas can be up to 500000Nm³/h (standard state, wet basis, and actual oxygen); SO₂ concentration can be up to 1750 mg/Nm³, the oxidation column diameter is 5.6 m and the height is 10.5 m; and the flow of the oxidized solution entering the oxidation column can be up to 650m³/h.

Finally, it is noted that all the above Examples of the present invention are only used for explaining the present invention, without limiting the scope of protection of the present invention. For a person skilled in the art, modifications can be made on the basis of the above Examples, and all the modifications do not depart from the scope of protection of the present invention.

## Claims

1. A method for oxidizing a solution for ammonia desulfurization, **characterized in that** during an oxidation process, a pressurized air with low costs and a multistage air distribution are used, for a compulsory oxidation of the absorption solution, for realizing a multistage circulation and for reaching the objective of high-efficiency and low-cost oxidation.

2. The method of claim 1, **characterized in that** an oxidized solution is supplemented with ammonia before entering an absorption column for ammonia desulfurization.

3. The method of claim 1 or 2, **characterized in that** the pressure of the pressurized air is 0.05-0.3 MPa-g, and preferably 0.07-0.23 MPa-g.

4. The method of any one of claims 1 to 3, **characterized in that** the stage number of the air distribution is 1-6, and preferably 2-5.

5. The method of any one of claims 1 to 4, **characterized in that** sieve plate(s) is/are used in one or more air distribution stages, and the sieve plate(s) has/have holes with a single hole area of 4-400 mm² and preferably 9-225 mm².

6. The method of claim 5, **characterized in that** the open porosity of the sieve plate(s) is 1%-15%, and preferably 1.5%-10%, and particularly preferably the open porosity of the sieve plates of the plurality of air distribution stages increase by degrees from the bottom to the top.

7. The method of any one of claims 1 to 6, **characterized in that** the oxidation air introduced is controlled so that the addition amount of the oxidation air is 1.2-20 times, preferably 2-8 times, of the theoretical amount of the oxidant required for oxidizing the ammonium sulfite and ammonium hydrogen sulfite in the absorption solution.

8. The method of any one of claims 1 to 7, **characterized in that** the circulation of the absorption solution is controlled so that in the absorption solution to be subjected to oxidization, the content of the ammonium sulfite and ammonium hydrogen sulfite is 0.1-8 (weight)%, the content of ammonium sulfate is 2-38 (weight)%, and preferably the content of the ammonium sulfite and ammonium hydrogen sulfite is 0.2-5 (weight)%.

9. The method of any one of claims 1 to 8, **characterized in that** the liquid volume in the oxidation column is controlled so that the oxidation time of the absorption solution in the oxidation column is 5-90 min, and preferably 10-70 min; and/or
the oxidation ratio of the ammonium sulfite and ammonium hydrogen sulfite in the oxidized absorption solution is controlled within 90%-99.9% or higher.

10. The method of any one of claims 1 to 9, **characterized in that** the oxidation of the absorption solution in the oxidation column is enhanced by an oxidation enhancing equipment.

11. A device for oxidizing a solution for ammonia desulfurization, **characterized by** comprising an oxidation air system and an oxidation system, the oxidation system comprising an oxidation column (tank), the oxidation column comprising a column body, wherein an oxidation chamber is formed in the column body, and an absorption solution inlet, an oxidized solution outlet, an oxidation air inlet and an oxidation air outlet being arranged in the column body.

12. The device of claim 11, **characterized in that** 1, 2, 3 or more layers of gas-liquid dispersion enhancers are arranged in the oxidation column; and preferably the form of the gas-liquid dispersion enhancers is any one or a combination of any number of structured packings, random packings, perforated plates, gas caps and aerators.

13. The device of claim 11 or 12, **characterized in that** the device further comprises an oxidation enhancing equipment; and preferably the oxidation enhancing equipment is any one or a combination of any number of an acoustic wave generating equipment, an ultrasonic wave generating equipment, an infrared ray generating equipment, an ultraviolet light generating equipment and an electron beam generating equipment.

14. The device of claim 13, **characterized in that** the ultrasonic frequency of the ultrasonic wave generating equipment is 50-100 kHz, and preferably 60-85 kHz, and the sound intensity is 12-40 W/L, and preferably 18-24 W/L.

15. The device of any one of claims 11 to 14, **characterized in that** an air distributor is arranged at a washing and cooling section in an absorption column for ammonia desulfurization, and the air distributor comprises a main pipe and a branch pipe, wherein the branch pipe has holes, with a single hole area of 25-625 mm², and preferably 64-400 mm².

16. A method for operating the device of any one of claims 11 to 15, **characterized in that** the method comprises the following process steps:
1) an absorption solution to be oxidized from an absorption column for ammonia desulfurization is sent to an oxidation column;
2) a pressurized oxidation air provided by an oxidation air system is introduced into the oxidation column, wherein the oxidation air is brought into contact with the absorption solution, and the ammonium sulfite and ammonium hydrogen sulfite in the absorption solution are oxidized into ammonium sulfate and ammonium hydrogen sulfate;
3) a part of the oxidized solution is sent to a washing and cooling section in the absorption column for ammonia desulfurization for spray, and the washing and cooling section is rinsed, and the other part of the oxidized solution is sent to an absorption section of the absorption column for ammonia desulfurization;
4) the reacted oxidation air is sent to the washing and cooling section and/or absorption section of the absorption column for ammonia desulfurization, wherein where sending to the washing and cooling section of the absorption column for ammonia desulfurization, the solution for washing and cooling is subjected to a secondary oxidation while the solution for washing and cooling is stirred.

17. The method of claim 16, **characterized in that** the method further comprises the following process step: the oxidized solution in step 3 is supplemented with ammonia before entering the absorption section.

18. A method for oxidizing an absorption solution for ammonia desulfurization, **characterized in that**,
the absorption solution is sent to an oxidation column from an absorption column for ammonia desulfurization, and an oxidized solution is sent to the absorption column for ammonia desulfurization from the oxidation column, thus realizing a multistage circulation of the absorption solution; and
during an oxidation in the oxidation column, a pressurized air is used as an oxidation air, and a multistage air distribution is used, for a compulsory oxidation of the absorption solution and for realizing a multistage circulation of the oxidation air.

19. A device for oxidizing an absorption solution for ammonia desulfurization, comprising an oxidation air system and an oxidation column, the oxidation column comprising a column body, wherein an oxidation chamber is formed in the column body, an absorption solution inlet for introducing the absorption solution to be oxidized, an oxidized solution outlet for discharging the oxidized absorption solution, an oxidation air inlet and an oxidation air outlet being arranged on the column body, the oxidation air system being connected to the oxidation air inlet, and the oxidation air outlet being connected to the absorption column for ammonia desulfurization, **characterized in that**,
the device is configured such that the absorption solution is sent to the oxidation column from the absorption column for ammonia desulfurization, and the oxidized solution is sent to the absorption column for ammonia desulfurization from the oxidation column, thus realizing a multistage circulation of the absorption solution; and
the oxidation air system is configured such that during the oxidation in the oxidation column, a pressurized air is used as an oxidation air, and a multistage air distribution is used, for a compulsory oxidation of the absorption solution, and for realizing a multistage circulation of the oxidation air.

20. Apparatus for oxidizing an ammonia desulfurization solution, the apparatus comprising:
an oxidation air system; and
an oxidation tank having:
an absorption liquid inlet;
an absorption liquid outlet;
an oxidation air inlet; and
an oxidation air outlet; and
a gas-liquid dispersion enhancer in the tank.

21. The apparatus of claim 20 wherein the enhancer includes one, two, three or more sieve plate layers that include a sieve plate respectively; and/or
the enhancer includes a feature selected from the group consisting of:
structured packings;
random packings;
apertured plates;
gas caps;
aeration heads; and
a combination of one or more of the foregoing features.

22. The apparatus of claims 20 or 21 further comprising an oxidation enhancing device mated to the tank,
wherein the oxidation enhancing device includes preferably an acoustic wave generating device, in particular an ultrasonic wave generating device, wherein the ultrasonic generating device is preferably configured to emit an ultrasonic frequency in the range 50 to 100 kHz.

23. The apparatus of claim 22 wherein:
the frequency is in the range 60 to 85 kHz; and
the ultrasonic generating device is configured to provide a sound intensity in the range 12 to 40 Watts/Liter, in particular in the range 18 to 24 Watts/Liter.

24. The apparatus of claim 22 wherein the oxidation enhancing device includes an infrared ray generating device, and/or an ultraviolet light generating device, and/or an electron beam generating device.

25. The apparatus of any of claims 20 to 24 further comprising:
a flue gas desulfurization tower washing and cooling section; and
an air distributor disposed in the washing and cooling section, the air distributor including a main pipe and a branch pipe that defines openings,
wherein an opening of the openings has preferably an area in the range 25 to 625 mm², in particular 64 to 400 mm².

26. Apparatus for oxidizing an ammonia desulfurization absorption liquid, the apparatus comprising:
an oxidation air system; and
an oxidation column that includes:
an oxidation column body;
an oxidation chamber in the oxidation column body, the chamber configured to provide a multi-stage air distribution that forces oxidization of the absorbing liquid;
an input on the tower body for inputting absorption liquid from an ammonia desulfurization absorption tower;
an outlet on the oxidation column body for providing oxidation-treated absorption liquid to the ammonia desulfurization absorption tower;
an oxidation air inlet on the oxidation column body, and
an oxidation air outlet on the oxidation column body;
wherein:
the oxidation air system is configured to feed pressurized air into the oxidation air inlet; and
the oxidation air outlet is configured to feed oxidation air into an ammonia desulfurization absorption tower.

27. A method for operating the apparatus of any of claims 20 to 26, the method comprising:
feeding absorption solution from an ammonia desulfurization absorption tower to the oxidation tank;
supplying oxidation air from the oxidation air system to the oxidation tank;
bringing the oxidation air into contact with the absorption liquid to oxidize ammonium sulfite and ammonium bisulfite in the absorption liquid to ammonium sulfate and ammonium bisulfate;
sending a first fraction of absorption solution from the absorption liquid output to a washing and cooling section of the ammonia desulphurization absorption tower;
in the washing and cooling section, using the first fraction, washing the flue gas;
sending a second fraction of absorption solution from the absorption liquid output to an absorption section of the desulfurization absorption tower;
sending air from the oxidation air outlet to the washing and cooling section to provide secondary oxidation of washing and cooling liquid; and
stirring the washing and cooling liquid.

28. A method for operating the apparatus of any of claims 20 to 26, the method comprising:
feeding absorption solution from an ammonia desulfurization absorption tower to the oxidation tank;
supplying oxidation air from the oxidation air system to the oxidation tank;
bringing the oxidation air into contact with the absorption liquid to oxidize ammonium sulfite and ammonium bisulfite in the absorption liquid to ammonium sulfate and ammonium bisulfate;
sending a first fraction of absorption solution from the absorption liquid output to a washing and cooling section of the ammonia desulfurization absorption tower;
in the washing and cooling section, using the first fraction, washing the flue gas;
sending a second fraction of absorption solution from the absorption liquid output to an absorption section of the desulfurization absorption tower;
sending air from the oxidation air outlet to the absorption section of the ammonia desulfurization absorption tower to provide secondary oxidation of the absorption solution.

29. The method of claim 27 further comprising sending air from the oxidation air outlet to the absorption section of the ammonia desulfurization absorption tower to provide secondary oxidation of the absorption solution.

30. The method of claim 28 further comprising sending air from the oxidation air outlet to the washing and cooling section to provide secondary oxidation of washing and cooling liquid.

31. The method of any of claims 27 to 30 further comprising adding ammonia to the absorption solution after the absorption solution exits the absorption liquid output and before the absorption solution enters the desulfurization absorption tower.

32. A method for operating the apparatus of claim 25, the method comprising:
feeding absorption solution from an ammonia desulfurization absorption tower to the oxidation tank;
supplying oxidation air from the oxidation air system to the oxidation tank;
bringing the oxidation air into contact with the absorption liquid to oxidize ammonium sulfite and ammonium bisulfite in the absorption liquid to ammonium sulfate and ammonium bisulfate;
sending a first fraction of absorption solution from the absorption liquid output to the washing and cooling section of the ammonia desulphurization absorption tower;
in the washing and cooling section, using the first fraction, washing the flue gas;
sending a second fraction of absorption solution from the absorption liquid output to an absorption section of the desulfurization absorption tower;
sending air from the oxidation air outlet to the washing and cooling section to provide secondary oxidation of washing and cooling liquid; and
stirring the washing and cooling liquid.

33. A method for operating the apparatus of claim 25, the method comprising:
feeding absorption solution from an ammonia desulfurization absorption tower to the oxidation tank;
supplying oxidation air from the oxidation air system to the oxidation tank;
bringing the oxidation air into contact with the absorption liquid to oxidize ammonium sulfite and ammonium bisulfite in the absorption liquid to ammonium sulfate and ammonium bisulfate;
sending a first fraction of absorption solution from the absorption liquid output to the washing and cooling section of the ammonia desulphurization absorption tower;
in the washing and cooling section, using the first fraction, washing the flue gas;
sending a second fraction of absorption solution from the absorption liquid output to an absorption section of the desulfurization absorption tower;
sending air from the oxidation air outlet to the absorption section of the ammonia desulfurization absorption tower to provide secondary oxidation of the absorption solution.

34. The method of claim 32 further comprising sending air from the oxidation air outlet to the absorption section of the ammonia desulfurization absorption tower to provide secondary oxidation of the absorption solution.

35. The method of claim 33 further comprising sending air from the oxidation air outlet to the washing and cooling section to provide secondary oxidation of washing and cooling liquid.

36. The method of any of claims 32 to 35 further comprising adding ammonia to the absorption solution after the absorption solution exits the absorption liquid output and before the absorption solution enters the desulfurization absorption tower.

37. A method for oxidizing an ammonia-bearing desulfurization solution, the method comprising:
expanding air, at an air distribution stage in a tank, against the solution; and, then,
providing the solution to a plurality of different sections of a flue gas desulfurization tower.

38. The method of claim 37 wherein the providing includes spraying the solution in a washing and cooling section of the tower, and/or the providing includes spraying the solution in an absorption section of the tower.

39. The method of claim 37 further comprising receiving the solution from the output of an absorption section of the tower.

40. The method of claim 37 further comprising, before the providing, adding ammonia to the solution.

41. The method of any of claims 37 to 40 further comprising providing air at 0.5-0.3 MPa-g, in particular at 0.7-0.23 MPa-g, for the expanding.

42. The method of any of claims 37 to 41 wherein the expanding includes distributing the air in more than one air distribution stage and/or in no more than 6 air distribution stages.

43. The method of any of claims 37 to 42 wherein:
the expanding includes, at the air distribution stage, passing the air through a sieve plate; and
the sieve plate defines a hole having an area that is 4 to 400 mm², in particular 9 to 225 mm²,
wherein the sieve plate has preferably a porosity of 1 to 15%, in particular 1.5 to 10%.

44. The method of claim 43 wherein:
the air distribution stage is included in a plurality of air distribution stages;
the air distribution stages are arrayed vertically;
each of the air distribution stages includes a sieve plate having a corresponding porosity; and
the porosity of the stages increase from a bottom stage to a top stage.

45. The method of any of claims 37 to 44 further comprising flowing the air into the tank at a rate no less than that stoichiometrically required to oxidize ammonium sulfite and ammonium bisulfite in the solution,
wherein the rate is preferably 1.2 to 20 times, in particular 2 to 8 times, that stoichiometrically required.

46. The method of any of claims 37 to 45 further comprising:
circulating the solution through the tower;
feeding the solution to the tank after the solution circulates through the tower; and
controlling the circulation so that, upon the feeding, the solution has:
0.1 to 8 wt%, in particular 0.2 to 5 wt%, ammonium sulfite and ammonium bisulfite; and
2 to 38 wt% ammonium sulfate.

47. The method of any of claims 37 to 46 further comprising selecting a volume for the tank so that the solution has an oxidation time in the oxidation tank of 5 to 90 min, in particular10 to 70 min.

48. The method of any of claims 37 to 47 further comprising:
feeding the solution to the tank in a condition in which the solution has a first sulfite content, including only ammonium sulfite and ammonium bisulfite; and
drawing the solution from the tank in a condition in which the solution has a second sulfite content, including only ammonium sulfite and ammonium bisulfite;
wherein the second sulfite content is no more than 10% of the first sulfite content, in particular no more than 0.1% of the first sulfite content.

49. The method of any of claims 37 to 48 further comprising enhancing oxidation of the solution using an oxidation enhancing device.

50. A method for oxidizing an ammonia desulfurization absorption liquid, the method comprising:
reacting the absorption liquid with flue gas in a desulfurization absorption tower;
after the reacting, transferring the absorption liquid to an oxidation column;
after the transferring, oxidizing the absorption liquid in the oxidation column; and,
after the oxidizing, returning the absorption liquid to the desulfurization absorption tower.

51. The method of claim 50 wherein the oxidizing includes distributing pressurized air in multiple stages in the absorption liquid.
